Europäisches Patentamt

European Patent Office

Office européen des brevets

(11) Publication number: **0 424 558 A1**

## EUROPEAN PATENT APPLICATION

(21) Application number: **89119773.3**

(22) Date of filing: **24.10.89**

(51) Int. Cl.⁵: **G06F 1/00**

(43) Date of publication of application:
**02.05.91 Bulletin 91/18**

(84) Designated Contracting States:
**AT CH DE ES FR GB GR IT LI SE**

(71) Applicant: **Lee, Eric**
**12th Floor, No. 296, Sec. 4 Jen Ai Road**
**Taipei(TW)**

(72) Inventor: **Lee, Eric**
**12th Floor, No. 296, Sec. 4 Jen Ai Road**
**Taipei(TW)**

(74) Representative: **Kador & Partner**
**Corneliusstrasse 15**
**W-8000 München 5(DE)**

(54) **A panel for a computer.**

(57) This invention relates to a panel for a computer and in particular to one including an elongated body portion with a first recess (12) at one end and a second recess (13) at the other, a plurality of slits on the surface thereof, a rack on both the upper and lower side thereof, and an opening beside the second recess. A switch (3) is mounted on the first recess of the body portion for turning on or turning off the computer. Two indicators (4) are fitted in the second recess of the body portion. Between the two indicators there is a lock (5). A cover with a shape adapted to the body portion and a plurality of slits for heat dissipation is engaged with the racks of the body portion so that the cover may slide therealong.

Fig.1

EP 0 424 558 A1

## A PANEL FOR A COMPUTER

### SUMMARY OF THE INVENTION

This invention relates to a panel for mounting on the front side of a computer.

It is the primary object of the present invention to provide a computer panel which has a movable door for keeping the disk drives from being dusted.

It is another object of the present invention to provide a computer panel which has two lots for receiving disk drives.

It is still another object of the present invention to provide a computer panel which is provided with a plurality of slits for heat dissipation.

It is still another object of the present invention to provide a computer panel which has a switch at on end.

It is still another object of the present invention to provide a computer panel which has two indicators for the disk drives.

Other objects and merits and a fuller understandings of the present invention will be obtained by those having ordinary skill in the art when the following detailed description of the preferred embodiment is read in conjunction with the accompanying drawings wherein like numerals refer to like or similar part.

### BRIEF DESCRIPTION OF THE DRAWINGS

FIG. 1 is a perspective view of a computer panel according to the present invention;

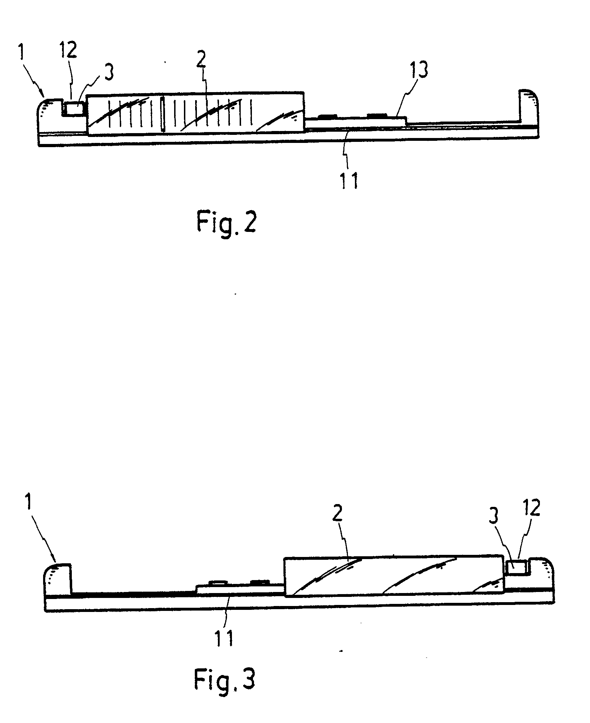

FIG. 2 is a front view thereof;
FIG. 3 is a rear view thereof;

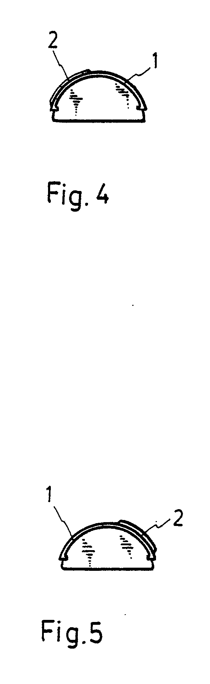

FIG. 4 is a right elevational view thereof;
FIG. 5 is a left elevational view thereof;

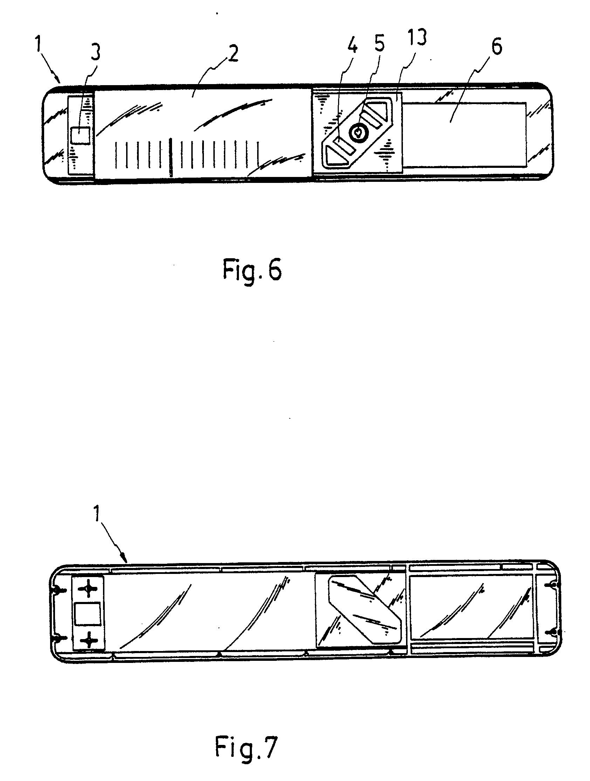

FIG. 6 is a top plan view thereof;
FIG. 7 is a bottom plan view thereof; and

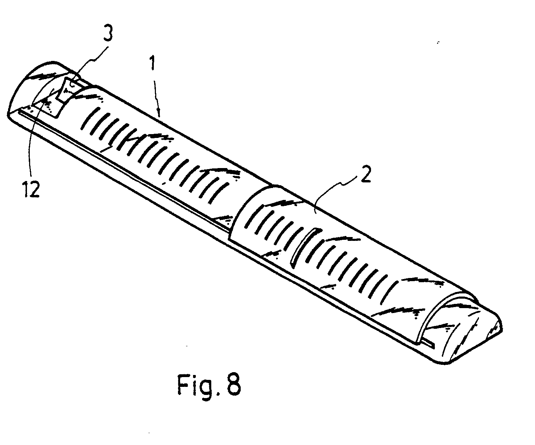

FIG. 8 is a perspective view of the computer panel with the cover closed.

### DETAILED DESCRIPTION OF THE PREFERRED EMBODIMENT

For purposes of promoting an understanding of the principles of the invention, reference will now be made to the embodiment illustrated in the drawings. Specific language will be used to described same. It will, nevertheless, be understood that no limitation of the scope of the invention is thereby intended, such alternations and further modifications in the illustrated device, and such further applications of the principles of the invention as illustrated herein being contemplated as would normally occur to one skilled in the art to which the invention relates.

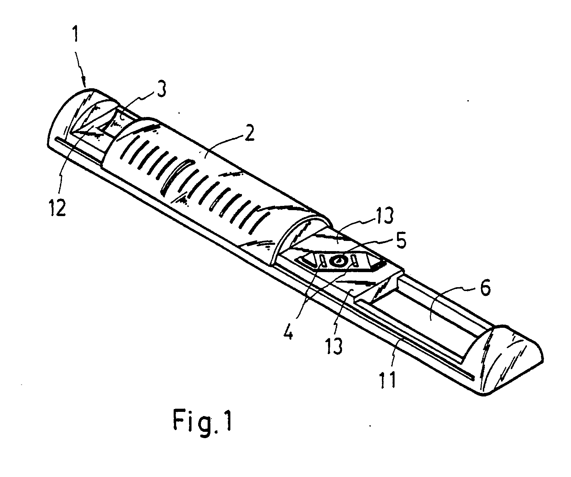

With reference to the drawings and in particular to FIG. 1 thereof, the computer panel according to the present invention comprises an elongated body portion 1 adapted to be fitted to the front side of a computer. The body portion 1 is generally a semi-cylindrical member with a first recess 12 at the left side and a second recess 13 at the right side. Further, there is a rack 11 on both the upper and lower parts for engaging with a movable cover 2. A switch 3 is mounted on the first recess 12 for turning on or turning off the computer. On the second recess 13 there is installed two indicators 4 for disk drives ( not shown ). A lock 5 is disposed between the two indicators 4 for locking up the computer. Beside the second recess 13 there is an opening 6 for receiving two drives ( not shown). The movable cover 2 has a shape adapted to the body portion 1 and engaged with the two racks 11 so that the cover 2 may move along the body portion 1 to close the disk drives thereby keeping it from being dusted. Moreover, there are a plurality of slits on both the body portion 1 and the cover 2 for dissipating the heat from the computer.

Although the invention has been described with a certain degree of particularlity, it is understood that the present disclosure is made by way of example only and that numerous changes in the detail of construction and the combination and arrangement of parts may be resorted to without departing from the spirit and scope of the invention as hereinafter claimed.

### Claims

1. A panel for a computer comprising:
an elongated body portion being a semi-cylindrical member with a first recess at one end and a second recess at the other end a plurality of slits for heat dissipation on the surface thereof, a rack on both upper and lower side thereof, and an opening beside the second recess for receiving disk drive;
a switch mounted on the first recess of said body portion for turning on or turning off the computer;
two indicators fitted in the second recess of said body portion;
a lock disposed between said two indicators; and
a cover having a shape adapted to said body portion and a plurality of slits for heat dissipation and engaged with the racks of said body portion so that said cover may slide therealong.

Fig.1

Fig. 2

Fig. 3

Fig. 4

Fig.5

Fig. 6

Fig.7

Fig. 8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | GB-A-2 195 955 (SHEN-I KO)<br>* Figures 3,6; page 1, line 114 - page 2, line 3 *<br>--- | 1 | G 06 F 1/00 |
| A | IBM TECHNICAL DISCLOSURE BULLETIN, vol. 28, no. 7, December 1985, pages 2785-2798, New York, US; "Industrial personal computer for class "C" industrial environment"<br>* Figures 5-8 *<br>----- | 1 | |
| | | | TECHNICAL FIELDS SEARCHED (Int. Cl.5) |
| | | | G 06 F 1/00 |

The present search report has been drawn up for all claims

| Place of search | Date of completion of the search | Examiner |
|---|---|---|
| THE HAGUE | 21-06-1990 | ALONSO Y GOICOLEA L. |